**Europäisches Patentamt**

**European Patent Office**

**Office européen des brevets**

(19)

(11) Veröffentlichungsnummer: **0 235 645**
A2

# (12) EUROPÄISCHE PATENTANMELDUNG

(21) Anmeldenummer: **87102060.8**

(22) Anmeldetag: **13.02.87**

(51) Int. Cl.⁴: **B 23 Q 11/08**

(30) Priorität: **25.02.86 DE 3605983**

(43) Veröffentlichungstag der Anmeldung: **09.09.87**
**Patentblatt 87/37**

(84) Benannte Vertragsstaaten: **CH DE ES FR GB IT LI SE**

(71) Anmelder: **Chiron-Werke GmbH, Talstrasse 23,
D-7200 Tuttlingen (DE)**

(72) Erfinder: **Rütschle, Eugen, Schonenbergstrasse 20,
D-7202 Mühlheim (DE)**
Erfinder: **Winkler, Hans-Henning, Dr.,
Brunnentalstrasse 88, D-7200 Tuttlingen (DE)**
Erfinder: **Haninger, Rolf, Obere Hauptstrasse 7,
D-7201 Seitingen (DE)**

(74) Vertreter: **Patentanwälte Kohler - Schwindling - Späth,
Hohentwielstrasse 41, D-7000 Stuttgart 1 (DE)**

(54) **Werkzeugmaschine.**

(57)    Eine Werkzeugmaschine ist mit einer Verkleidung verse-hen, in der eine Beschickungstür (10) angeordnet ist. Die Be-schickungstür schließt in ihrer ersten Endlage die Verkleidung nach außen ab und in ihrer zweiten Endlage nimmt sie eine im wesentlichen um eine waagerechte Achse in ihrem oberen Be-reich geschwenkte Lage ein. In dieser Lage ist der untere Rand der Beschickungstür (10) ins Innere der Verkleidung ver-lagert. Die Beschickungstür (10) ist während ihrer Bewegung derart geführt, daß ihre Unterkante zwischen den beiden Endlagen höher liegt als in den Endlagen.

Um einer Bedienungsperson das Öffnen und Schließen der Tür zu erleichtern ist ein motorischer Antrieb (95, 100, 101) zum Öffnen und Schließen der Beschickungstür (10) in einer seitlichen Ausbuchtung (90) der Verkleidung angeordnet.

EP 0 235 645 A2

ACTORUM AG

Anmelder:
Chiron-Werke GmbH
Talstraße 23
7200 Tuttlingen

Verteter:
Patentanwälte
Kohler-Schwindling-Späth
Hohentwielstraße 41
7000 Stuttgart 1

Stuttgart, den 12. Februar 1987
P 4833 EP W/Wu

## Werkzeugmaschine

Die Erfindung betrifft eine Werkzeugmaschine mit einer in einer Verkleidung angeordneten Beschickungstür, die in ihrer ersten Endlage die Verkleidung nach außen abschließt und in ihrer zweiten Endlage eine im wesentlichen um eine waagerechte Achse in ihrem oberen Bereich geschwenkte Lage einnimmt, in der der untere Rand der Beschickungstür während ihrer Bewegung derart geführt ist, daß ihre Unterkante zwischen den beiden Endlagen höher liegt als in den Endlagen, wobei die Verkleidung zwei nach vorne zur Beschickungstür hin schräg zulaufende und nach oben abgeschrägte symmetrische Wandteile aufweist.

0235645

2

Eine derartige Werkzeugmaschine ist aus der DE-OS 33 20 738 bekannt.

Die bekannte Werkzeugmaschine ist ein numerisch gesteuertes Fertigungszentrum, insbesondere für Bohr- und Fräsarbeiten an metallischen Werkstücken. Die Werkzeugmaschine weist eine Verkleidung mit Tür auf, die während der Bearbeitung der Werkstücke verhindert, daß Bohröl, Späne und dergleichen in die Umgebung der Werkzeugmaschine verspritzt werden können, was insbesondere bei den hohen Zerspanungsgeschwindigkeiten moderner Fertigungszentren von besonderer Bedeutung ist.

Die Beschickungstür der bekannten Werkzeugmaschine ist so aufgehängt, daß sie beim Öffnen mit ihrer Unterkante über ein auf einem Bearbeitungstisch aufgespanntes Werkstück hinübergeführt wird. Dies hat zur Folge, daß im geöffneten Zustand die Beschickungstür sich zwischen dem Werkstück und dem dahinter angeordneten Spindelstock befindet.

Es hat sich jedoch gezeigt, daß es insbesondere bei einem häufigen Werkstückwechsel durch einen Benutzer ermüdend sein kann, die auf einer komplizierten Ortskurve in der Höhe verschwenkbare Beschickungstür in häufigem Wechsel zu öffnen und zu schließen.

Aus der DE-OS 25 03 036 ist es an sich bekannt, eine metallbearbeitende Maschine, insbesondere eine Stanze oder Presse mit einer Schutzabdeckung zu versehen, die einen motorischen Antrieb zum Betätigen eines Verkleidungselementes aufweist. Bei der bekannten Vorrichtung ist an der Kopfseite einer Presse eine nach vorn aufschwenkbare Tür im Abstand über dem Maschinenbett angeordnet, wobei die Tür mittels an einer Seitenkante übereinander angeordneter Scharniere verschwenkbar ist. Über das untere Ende der Tür nach unten hinaus ist
ein Schieber nach unten aus der Tür herausfahrbar. Zum
Verfahren des Schiebers ist eine Kolben-Zylinder-Einheit
vorgesehen, die in der verschwenkbaren Tür angeordnet ist.
Im nach unten ausgefahrenen Zustand des Schiebers wird
dieser um zwei seitlich unter 90° angrenzende abklappbare
Seitenwände ergänzt, um einen Werkzeugeinbauraum von drei
Seiten zu umgeben. Zum Werkzeugwechsel wird der Schieber
nach oben verfahren und die beiden Seitenwände werden abgeklappt. Außerdem kann die Tür mit eingefahrenem Schieber
noch nach vorne verschwenkt werden. Die bekannte Vorrichtung, d.h. die Tür mit Anhieb für den Schieber und mit den
Seitenwänden, nachrüstbar, indem entweder vorhandene Maschinen, die über keine derartige Vorrichtung verfügen, mit
einer solchen Vorichtung komplett ausgestattet werden oder
bei Maschinen, die bereits eine ähnliche Vorrichtung enthalten, die Vorrichtung ausgetauscht wird.

Die bekannte Maschine weist somit zwei voneinander unabhängige Abdeckelemente, nämlich zum einen die nach vorne verschwenkbare Tür und zum anderen den in der Vertikalen verfahrbaren Schieber auf. Eine Nachrüstung ist nur in dem
Sinne möglich, daß ein komplettes Türenaggregat mit dem
motorischen Antrieb für den Schieber angebaut oder umgetauscht wird. Die bekannte Vorrichtung ist daher nicht bei
Maschinen einsetzbar, bei denen nur ein verschwenkbares
Abdeckungselement vorgesehen ist, das überdies selbst von
Einbauten freibleiben muß, weil durch die Tür hindurch eine
optische Überwachung des Bearbeitungsvorganges in der Werkzeugmaschine möglich bleiben muß, insbesondere indem der
Benutzer der Werkzeugmaschine einen freien Blick auf die

4

Bearbeitungsposition hat, was bei Pressen naturgemäß weniger wichtig ist, weil sich der Verformungsvorgang bei Pressen durch Schließen der Preßwerkzeuge einstellt, so daß eine Beobachtung des Werkstückes während des Preßvorganges ohnehin nicht möglich ist, anders, als dies bei spanabhebenden Werkzeugmaschinen, beispielsweise bei Fräs-und Bohrzentren der Fall ist.

Der Erfindung liegt daher die Aufgabe zugrunde, eine Werkzeugmaschine der eingangs genannten Art dahingehend weiterzubilden, daß in an sich bekannter Weise der Benutzer der Maschine von unnötiger und ermüdender Arbeit beim häufigen Öffnen und Schließen der Beschickungstür entlastet wird, ohne daß hierzu die Tür an sich verändert werden muß, so daß die Vorteile bekannter Türen, insbesondere die Beobachtbarkeit des Arbeitsraumes erhalten bleibt.

Diese Aufgabe wird erfindungsgemäß dadurch gelöst, daß in an sich bekannter Weise ein motorischer Antrieb zum Öffnen und Schließen der Beschickungstür vorgesehen ist, daß der motorische Antrieb in einer seitlichen Ausbuchtung der Verkleidung angeordnet ist und daß der motorische Antrieb mit einer Halterung sowie vorzugsweise der seitlichen Ausbuchtung als Einsatzteil in einer Fensteröffnung des Wandteils ausgebildet ist.

5

Die der Erfindung zugrundeliegende Aufgabe wird damit vollkommen gelöst, weil durch den motorischen Antrieb, der beispielsweise durch einen an einem Handgriff angeordneten Schalter in Funktion gesetzt werden kann, der Benutzer der Werkzeugmaschine spürbar entlastet wird, weil das häufige Öffnen und Schließen der Tür durch Muskelkraft entfällt.

Gleichzeitig wird durch die Unterbringung des motorischen Antriebes in der seitlichen Ausbuchtung der Verkleidung erreicht, daß keine zusätzlichen und sperrigen Teile vorhanden sind, an denen der Benutzer der Maschine beispielsweise mit seinem Arbeitskittel hängen bleiben könnte.

Diese Maßnahmen haben ferner den Vorteil, daß er motorische Antrieb auch nachträglich bei bereits vorhandenen Werkzeugmaschinen nachgerüstet werden kann, weil sämtliche zum motorischen Verstellen der Beschickungstür erforderlichen Elemente in eine üblicherweise ohnehin vorgesehene Fensteröffnung des Wandteils eingesetzt werden können.

Bei einer anderen bevorzugten Ausgestaltung der Erfindung
umfaßt der motorische Antrieb einen Stellmotor, dessen Welle
über einen ersten Betätigungsarm die Beschickungstür verschwenkt.

Diese Maßnahme hat den Vorteil, daß, im Gegensatz zu einer
Verschwenkung mit beispielsweise Zahnstangen oder Seilzügen
und dergleichen ein kompakter Aufbau des motorischen Antriebes möglich ist, wobei ferner die Verschwenkgeschwindigkeit
der Tür durch entsprechende Drehzahleinstellung vorwählbar
ist.

Bei einer weiteren bevorzugten Ausgestaltung der Erfindung
sitzt ein zweiter Betätigungsarm auf der Welle und liegt in
mindestens einer Endstellung des motorischen Antriebes an
einem raumfesten Anschlag an.

Diese Maßnahme hat den Vorteil, daß Endstellungen der Beschickungstür sicher erreicht werden, wobei durch geeignete
Endschalter sichergestellt sein kann, daß der elektromotorische Antrieb in diesen Endstellungen abgeschaltet wird. Eine
weitere Ausführungsform der Erfindung zeichnet sich dadurch
aus, daß ein Stellmotor sowie ein Steuergerät für den Stellmotor auf einem die Ausbuchtung überspannenden Halteblech
angeordnet sind.

Auch diese Ausführungsform der Erfindung hat den Vorteil,
daß ein leichtes Nachrüsten bereits bestehender Werkzeugmaschinen möglich ist, außerdem erfordern diese Merkmale keine
wesentlichen Veränderungen bereits vorhandener Konstruktionen. Schließlich haben diese Merkmale den Vorteil, daß der
gesamte motorische Antrieb auch leicht zu Wartungszwecken
und dergleichen ausgebaut werden kann.

Die Führung der Tür kann bei Ausführungsformen der Erfindung in geeigneten Gleitschienen vorgesehen sein, die zweckmäßigerweise so ausgebildet sein können, daß sie dann, wenn sich die Tür in ihrer ersten, die Verkleidung vollständig abschließenden Stellung befindet, nicht ins Innere des Innenraums ragen.

Bei einer Ausführungsform der Erfindung ist jedoch vorgesehen, daß die Tür in ihrem unteren Bereich durch ein erstes Lenkerpaar geführt ist, das einerseits an der Tür und andererseits am ortsfesten Teil der Verkleidung angelenkt ist, und daß die Tür durch ein weiteres Lenkerpaar geführt ist, das einerseits im oberen Bereich der Tür und andererseits am ortsfesten Teil der Verkleidung angelenkt ist, und daß der Schwenkweg des zweiten Lenkerpaares zur Erzwingung eines Umkehrpunktes bei gleichbleibender Verschwenkung des ersten Lenkerpaares begrenzt ist.

Der Vorteil dieser Merkmale liegt darin, daß die Lenker sehr einfach und raumsparend vorgesehen werden können und ohne besondere Maßnahmen dann, wenn sich die Tür in ihrer ersten Endlage befindet, nicht weit ins Innere der Verkleidung vorragen. Das zweite Lenkerpaar erreicht etwa dann seinen Umkehrpunkt der Schwenkbewegung, wenn sich die Oberkante der Tür in der während des Schwenkvorganges maximal erreichbaren Höhe befindet.

Gemäß einer weiteren Ausführungsform der Erfindung kann es vorteilhaft sein, wenn sich in dieser Stellung das zweite Lenkerpaar etwa in lotrechter Stellung befindet. Es wird hier von Lenkerpaaren gesprochen, weil die Lenker zweckmäßigerweise jeweils an beiden Seiten der Tür angeordnet werden, um diese besonders einfach und genau führen zu können.

Die Länge der Lenker kann je nach dem Weg, den die Unterkante der Tür beschreiben soll, geeignet gewählt werden. Dies gilt auch für die Stellung, die die Lenkerpaare beispielsweise in der ersten Endlage der Tür relativ zueinander einnehmen. Im Ausführungsbeispiel ist die Anordnung so getroffen, daß die beiden Lenkerpaare nicht exakt gleich lang sind, jedoch nahezu gleich lang sind, und daß sie von der parallelen Stellung in der Tür etwas abweichen.

Da die Beschickungstür während ihrer Bewegung zwischen den beiden Endlagen insgesamt angehoben werde muß, ist gemäß einer Ausführungsform der Erfindung eine Vorrichtung zur Gewichtsentlastung vorgesehen. Gemäß einer Weiterbildung der Erfindung ist ein wesentlicher Besandteil dieser Vorrichtung zur Gewichtsentlastung eine Feder, die in den beiden Endlagen der Beschickungstür gespannt ist (nicht notwendigerweise in beiden Endlagen gleich stark), und die etwa dann, wenn der Schwerpunkt der Tür seine höchste Stellung erreicht hat, am wenigsten gespannt ist. Der Vorteil einer derartigen Feder liegt darin, daß sie ohne Fremdenergie wirksam ist, und daß sie außerdem dann, wenn sich die Tür nach dem Überschreiten des höchsten Punktes der anderen Endlage nähert, dadurch, daß die Feder wieder gespannt wird, einen schlagartigen Übergang in die andere Endlage, der mit unerwünschter starker Geräuschentwicklung verbunden sein könnte, verhindert. Dies gestattet, Antriebsmotoren von verhältnismäßig geringer Leistung zum Verstellen der Tür einzusetzen und im Notfall kann auch ein Arbeiter die Tür ohne große Kraftaufwendung mit der Hand öffnen oder Schließen.

Besonders günstig läßt sich die Feder gemäß einer Ausführungsform der Erfindung dann unterbringen, wenn sie an den oberen Lenkern, also am zweiten Lenkerpaar, angreift. Bei einer Ausführungsform der Erfindung ist hierzu vorgesehen, daß am zweiten Lenkerpaar ein Arm angeordnet ist, an dem die Feder angreift, und die Feder ist in vorteilhafter Weise im wesentlichen in waagerechter Lage angeordnet. Besonders einfach kann die Feder als Schraubenzugfeder ausgebildet sein.

Um einen genauen Gleichlauf der links und rechts an der Beschickungstür angeordneten Lenker sicherzustellen, sind gemäß einer Ausführungsform der Erfindung die beiden Lenker des zweiten Lenkerpaars mit einer sie verbindenden Welle drehfest verbunden, und an dieser Welle ist der oben erwähnte Arm angeordnet, an dem die Feder angreift.

An dieser Welle können vorteilhafterweise auch Endschalter vorgesehen sein, die die jeweilige Stellung der Beschickungstür erkennen, um in Abhängigkeit davon die Arbeitsweise der Werkzeugmaschine zu beeinflussen.

Weitere Merkmale und Vorteile der Erfindung ergeben sich aus der nachfolgenden Beschreibung eines Ausführungsbeispiels der Erfindung anhand der Zeichnung, die erfindungswesentliche Einzelheiten zeigt, und aus den Ansprüchen. Die einzelnen Merkmale können je einzeln für sich oder zu mehreren in beliebigen Kombinationen bei einer Ausführungsform der Erfindung verwirklicht sein. Es zeigen:

Fig. 1    eine perspektivische Gesamtansicht einer Werkzeugmaschine mit Verkleidung und Beschickungstür;

Fig. 2        eine Draufsicht auf die Verkleidung der Werkzeugmaschine im Bereich der Beschickungstür;

Fig. 3        einen Vertikalschnitt entsprechend der Linie
III-III in Fig. 2, in dem die Stellungen der
Lenker während der Bewegung der Beschickungstür
eingetragen sind;

Fig. 4        eine Detailansicht, von der Seite, eines motorischen Antriebes zum Verschwenken einer Beschikkungstür;

Fig. 5        eine Schnittdarstellung entlang der Linie V-V in
Fig. 4.

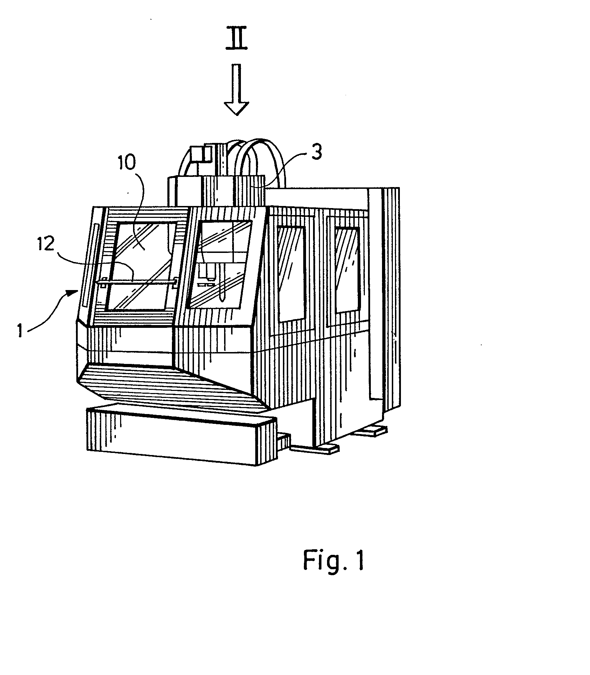

Die in Fig. 1 sichtbare Verkleidung 1 umgibt eine numerisch
steuerbare Werkzeugmaschine mit einem in waagerechter und
senkrechter Richtung bewegbaren Spindelstock 3 mit lotrechter Drehachse der Werkzeugspindel. An der Seite der Verkleidung 1, die hier als Vorderseite bezeichnet werden soll,
befindet sich eine Beschickungstür 10, die in Fig. 1 in
ihrer ersten Endlage gezeigt ist, in der sie den Zugriff ins
Innere der Verkleidung 1 vollständig verhindert und die
Umgebung der Werkzeugmaschine gegen Herausspritzen von
Bohröl oder Spänen schützt. Im unteren Drittel ist an der
Außenseite der Beschickungstür 10 eine waagerecht verlaufende Stange 12 angeordnet, die als Griff zum manuellen Öffnen
der Beschickungstür dient. In der Nähe der Stange 12 ist
vorzugsweise ein in Fig. 1 nicht dargestellter Schalter
angeordnet, mit dem in weiter unten noch beschriebener Weise
eine motorische Verstellung der Beschickungstür 10 möglich ist. Die Stange 12 dient somit in erster Linie dazu, um gegebenenfalls bei einem Ausfall der elektrischen Versorgungsspannung die Tür auch manuell öffnen oder schließen zu können.

Die Beschickungstür 10 weist, wie auch die übrigen Teile der Verkleidung 1, eine Verglasung auf, um dem Arbeiter die Überwachung der Arbeitsvorgänge zu erleichtern.

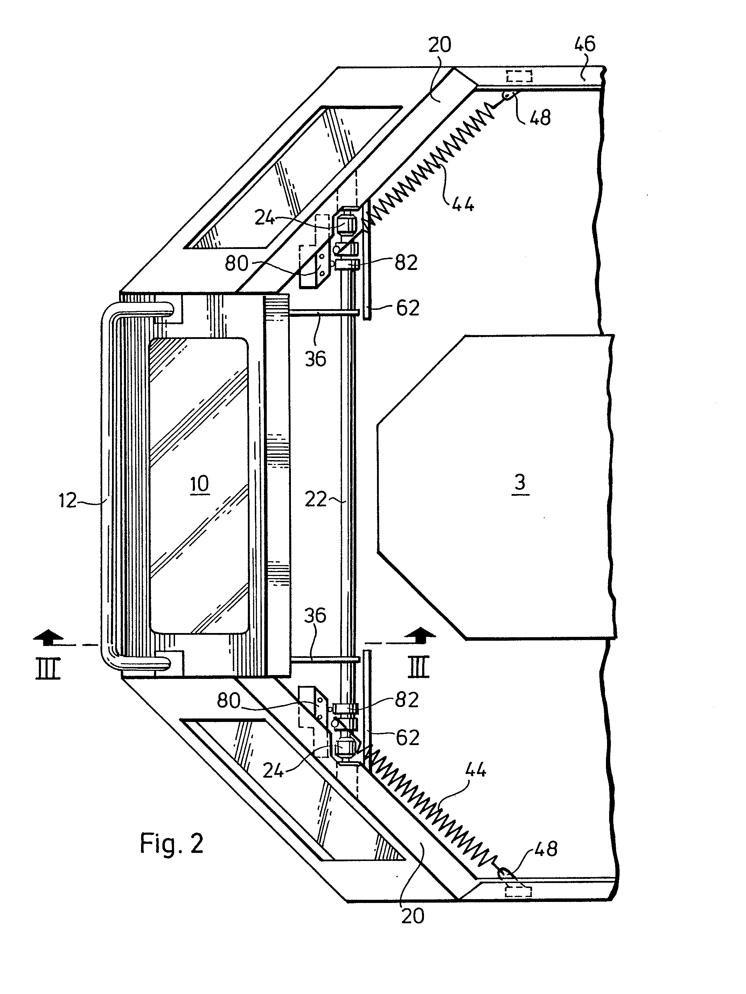

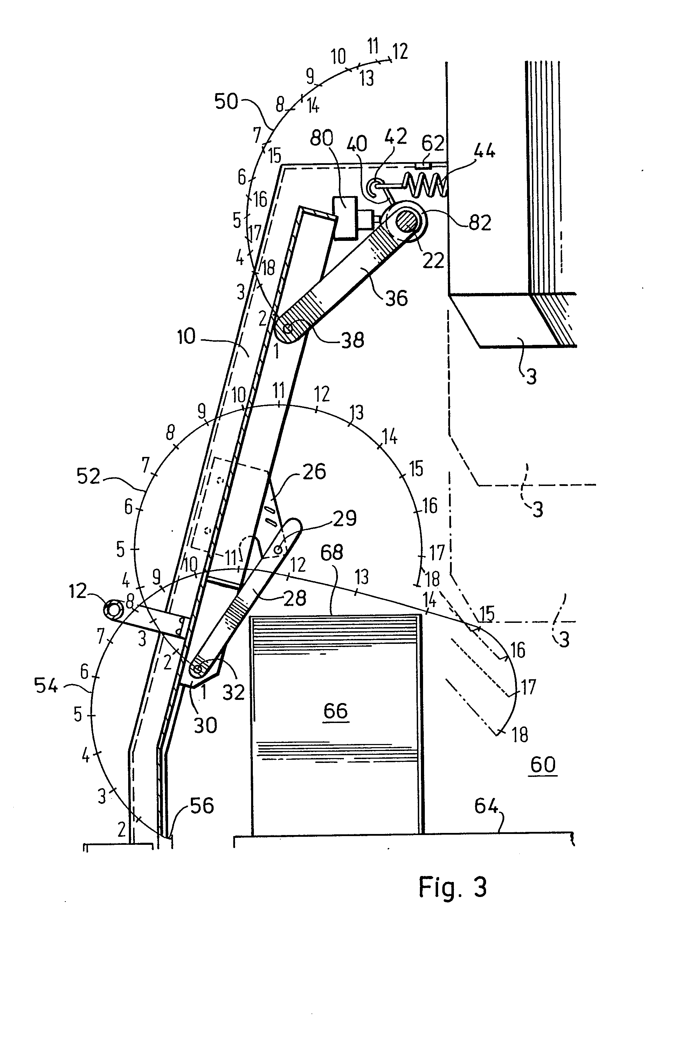

In Fig. 2 ist der Spindelstock 3 lediglich schematisch dargestellt, die Beschickungstür 10 befindet sich in ihrer geschlossenen Position, also in der ersten Endlage. Dies gilt auch für die Fig. 3. Nachfolgend werden die Fig. 2 und 3 gemeinsam betrachtet.

In ortsfesten Wandteilen 20 der Verkleidung 1 ist im oberen Bereich der Verkleidung eine Welle 22 mittels einer Lagerung 24 drehbar gelagert. Etwa auf halber Höhe der Beschickungstür 10 ist an den ortsfesten Teilen oder Wänden 20 der Verkleidung 1 in unmittelbarer Nähe der seitlichen Ränder der Beschickungstür 10, die in Fig. 2 oben und unten liegen, jeweils eine Lagerung 26, nämlich ein Metallwinkel, befestigt, an dem jeweils ein Lenker 28 eines ersten Lenkerpaares angelenkt ist. Das andere Ende des Lenkers 28 ist an einem im wesentlichen rechtwinklig zur Ebene der Beschickungstür 10 verlaufenden Rahmenteil 30 der Beschickungstür 10 an einem Gelenk 32 angelenkt. In der ersten Endlage der Beschickungstür 10 verläuft die Richtung der Lenker 28 des ersten Lenkerpaares vom Gelenk 29 zum Gelenk 32 nach unten und außen ungefähr unter einem Winkel von 60° gegenüber der Horizontalebene.

An der Welle 22 sind zwei Lenker 36 eines zweiten Lenkerpaares parallel zueinander drehfest befestigt. Die der Welle
22 abgewandten Enden der Lenker 36 sind über Gelenke 38 mit
den Rahmenteilen 30 verbunden. Die Lenker 36 verlaufen von
ihrer durch die Welle 22 gebildeten Schwenkachse zum Gelenk
38 in der in Fig. 3 gezeigten Stellung ebenfalls nach unten
und außen, jedoch etwas flacher als die Lenker 28, und zwar
unter einem Winkel von etwa 45° gegenüber der Horizontalebene.

An der Welle 22 ist im Bereich ihrer beiden Enden jeweils
ein kurzer Hebelarm 40 drehfest befestigt, der an seinem
Ende einen Haken 42 bildet, in dem das Ende einer Schrauben-Zugfeder 44 unverlierbar eingehakt ist. Das andere Ende
der Feder 44 ist in einem ortsfesten Teil 46 der Verkleidung
1 an einem Ankerpunkt 48 befestigt. Die Feder 44 verläuft im
wesentlichen in waagerechter Richtung etwas unterhalb des
oberen Randes der Verkleidung 1, so daß sie nach außen
optisch nicht in Erscheinung tritt. Der Arm 42 verläuft in
der Blickrichtung der Fig. 3 nach links oben, wogegen vom
Haken 42 aus sich die Feder 44 nach rechts erstreckt.

In Fig. 3 sind ein um die Achse der Welle 22 verlaufender,
durch das Gelenk 38 gehender Kreisbogen 50 und ein um das
Gelenk 29 gezogener und durch das Gelenk 32 verlaufender
Kreisbogen 52 eingetragen, außerdem eine Kurve 54. Die Kurve
54 beschreibt als Ortskurve den Weg, den eine Unterkante 56
der Tür 10 zurücklegt, wenn die Beschickungstür 10 aus der
in Fig. 3 gezeigten ersten Endlage in ihre zweite, geöffnete
Endlage bewegt wird. In der zweiten Endlage nimmt die Beschickungstür 10 gegenüber der rechtwinklig zur Zeichenebene der Fig. 3 verlaufenden Vertikalebene eine Stellung ein, in der die Unterkante 56 der Tür in einen Innenraum 60 der Verkleidung 1 hineinragt.

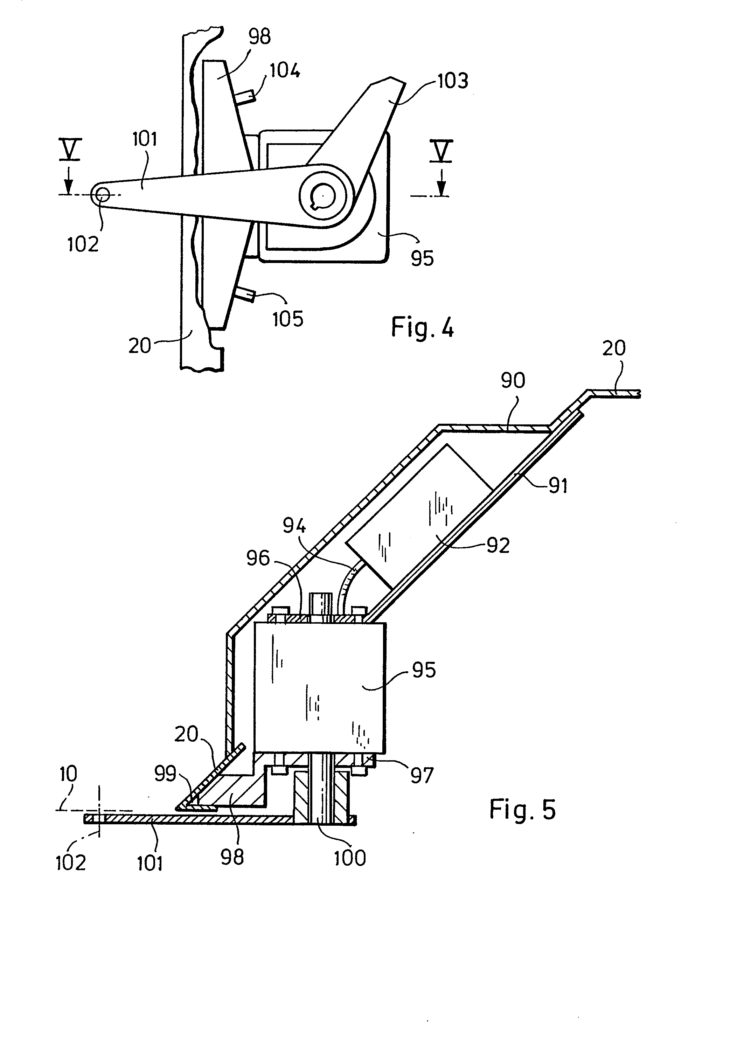

An der Kurve 54 sind Marken 1 bis 18 eingezeichnet, und an den Kreisbögen 50 und 52 sind gleichfalls Marken 1 bis 18 eingezeichnet. Jeweils dann, wenn sich die Unterkante 56 der Beschickungstür 10 an einer dieser gedachten Marken befindet, so befinden sich die Gelenke 38 bzw. 32 an derjenigen Marke der Kurven 50 bzw. 52, die mit der gleichen Zahl versehen ist. Das Gelenk 32 beschreibt somit während der Bewegung der Beschickungstür aus der ersten (äußeren) Endlage in die zweite (innere) Endlage einen Weg von etwa 270°, wogegen sich das Gelenk 38 und somit die Lenker 36 zunächst im gleichen Drehsinn wie die Lenker 28 bewegen, jedoch nur bis die Lenker 36 etwa eine lotrechte Stellung eingenommen haben. Ein Überfahren die lotrechten Stellung durch die Lenker 36 wird durch einen Anschlag 62 verhindert. Anstelle des Anschlages 62 können auch andere Anschläge wirken, wie sie weiter unten zu Fig. 4 noch beschrieben werden. Wird die Beschickungstür 10 mit ihrem unteren Bereich weiter nach innen, in Fig. 3 also nach rechts bewegt, so bewegt sich im Anschluß das Lenkerpaar 36 in der Ansicht der Fig. 3 wieder im Gegenuhrzeigersinn entsprechend den in die Kurve 50 eingetragenen Marken 13 bis 18. In der inneren Endlage befindet sich somit das Gelenk 38 gegenüber der in Fig. 3 gezeigten Stellung in einer etwas nach außen und oben verschobenen Lage.

Im rechten Teil der Fig. 3 ist durch unterschiedliche Stricharten angedeutet, daß der Spindelkopf 3 sich in die mit strichpunktierten Linien gezeigte Stellung abwärts bewegen kann, ohne daß die Gefahr besteht, daß er mit der in
der zweiten Endlage befindlichen Beschickungstür 10 kollidiert. Auf einem lediglich angedeuteten Maschinentisch 64
der Werkzeugmaschine, der um eine lotrechte Achse um jeweils
180° verschwenkbar ist, befindet sich ein Werkstück 66,
dessen Oberseite 68 höher liegt als die Unterkante 56 der
Beschickungstür 10 in der ersten und zweiten Endlage. Die
Kurve 54 zeigt, daß die Beschickungstür 10 ohne Kollision
mit dem Werkstück 66 zwischen den beiden Endlagen hin- und
herbewegt werden kann.

Die beiden Federn 44 sind in der in Fig. 3 gezeigten Stellung maximal gespannt. Wird die Beschickungstür 10 ausgehend
von der in Fig. 3 gezeigten Stellung nach oben bewegt, so
verdreht sich der Arm 40 im Uhrzeigersinn, dadurch kann sich
die als Zugfeder ausgebildete Feder 44 verkürzen und gibt
dabei gespeicherte Energie ab, die das Anheben des Gewichts
der Beschickungstür 10 erleichtert, so daß ein elektromotorischer Antrieb mit relativ geringer Leistung ausgelegt
werden kann, wie dies weiter unten zu den Fig. 4 und 5 noch
beschrieben wird. Etwa dann, wenn die Lenker 36 die lotrechte Stellung eingenommen haben, ist die Feder 44 minimal
gespannt. Wenn sich die Lenker 36 bei der Weiterbewegung der
Beschickungstür 10 wieder im Gegenuhrzeigersinn bewegen, so
werden die Federn 44 wieder zunehmend gespannt und nehmen
dadurch einen Teil der durch das Anheben der Tür in dieser
gespeicherten potentiellen Energie auf, wenn sich die Tür
insgesamt wieder nach unten bewegt, um ihre zweite Endlage
einzunehmen. Es versteht sich jedoch, daß bei Vorsehen eines
elektromotorischen Antriebes, wie jetzt in Fig. 4 und 5 noch
beschrieben werden wird, auch eine Beschickungstür 10 ohne Federn 44 eingesetzt werden kann, wobei dann die Betätigungskraft des Antriebes entsprechend eingestellt werden muß.

Ein elektrischer Endschalter 80 wirkt mit einer auf der Welle 22 befestigten Nockenscheibe 82 zusammen und erkennt, wenn sich die Tür 10 in ihrer äußeren Endlage befindet. Nur in dieser Stellung darf der Tisch der Werkzeugmaschine gedreht werden.

Die Fig. 4 und 5 zeigen in zwei Ansichten einen elektromotorischen Antrieb, wie er zum hilfskraftbetätigten Verfahren der Beschickungstür 10 verwendet werden kann.

Man erkennt in Fig. 5 deutlich das Wandteil 20, das, wie die Fig. 1 und 2 zeigen, schräg nach vorne zur Beschickungstür 10 verläuft, und außerdem nach obenhin abgeschrägt ist. Das Wandteil 20 läuft vorne im Bereich der Öffnung für die Beschickungstür 10 in eine umgefaltete spitze Blechkante aus.

Im Bereich eines der in den Fig. 1 und 2 zu erkennenden Fensters im Wandteil 20 ist bei der Ausführungsform gemäß den Fig. 4 und 5 eine im Horizontalschnitt trapezförmige Ausbuchtung 90 vorgesehen, die durch eine entsprechende Blechverkleidung gebildet wird. Die Ausbuchtung 90 kann mit dem Wandteil 20 einstückig sein, besonders bevorzugt ist jedoch eine Ausführungsform, bei der die Ausbuchtung 90 mit den weiter unten noch geschilderten Einbauten als Einsatzteil ausgebildet ist, so daß sie in bestehende Fensteröffnungen bereits vorhandener Maschinen einsetzbar ist oder aber in neu herzustellende Maschinen ohne Änderung der
übrigen Konstruktion mit einem elektromotorischen Antrieb
ausgerüstet werden kann.

Die von der Ausbuchtung 90 überspannte Fensteröffnung im
Wandteil 20 wird innen von einem Halteblech 91 über einen
Großteil ihrer Breite ebenfalls überspannt. Auf einem zur
Fensteröffnung parallelen Abschnitt des Halteblechs 91 ist
ein Steuergerät 92 für einen elektromotorischen Antrieb
angebracht. Das Steuergerät 92 kann ein elektrisches, elektronisches, hydraulisches, pneumatisches oder sonstiges
Steuergerät sein und der weiter unten noch beschriebene
elektromotorische Antrieb kann einen Elektromotor, einen
Fluidmotor oder dergleichen aufweisen.

Über Verbindungsleitungen 94 steht das Steuergerät 92 mit
einem Stellmotor 95 in Verbindung. Der Stellmotor 95 ist mit
seiner hinteren Stirnseite an einen ersten Flansch 96 des
Halteblechs 91 geschraubt. Der erste Flansch 96 verläuft
parallel zur Verschwenkebene der Beschickungstür 10. Die
gegenüberliegende Stirnseite des Stellmotors 95 ist an einen
zweiten Flansch 97 geschraubt, der zum ersten Flansch 96
parallel verläuft und neben dem Stellmotor 95 in ein abgeschrägtes Endstück 98 übergeht. Das Endstück 98 ist mit
seiner Schräge in der Spitze 99 angeordnet, die, wie bereits
erwähnt, am vorderen Rand des Wandteils 20 durch gefaltetes
Umbiegen im Bereich der Öffnung für die Beschickungstür 10
gebildet ist.

Eine zur Verschwenkebene der Beschickungstür 10 senkrecht
verlaufende Welle 100 des Stellmotors 95 trägt an ihrem
freien Ende einen ersten Betätigungsarm 101. Der erste Betätigungsarm 101 ist an seinem freien Ende mit einem Befestigungsmittel 102 schwenkbar mit der Beschickungstür 10 verbunden, der in Fig. 5 nur angedeutet ist.

Auf der Welle 100 ist ferner ein zweiter Betätigungsarm 103 angeordnet, der beim Verschwenken der Beschickungstür 10 in den beiden Endlagen an Anschläge 104 bzw. 105 läuft, wobei diese Anschläge 104, 105 auch mit Endschaltern versehen sein können, um den Stellmotor 95 bei Erreichen der Endlagen abzuschalten.

Patentansprüche

1. Werkzeugmaschine mit einer in einer Verkleidung angeordneten Beschickungstür (10), die in ihrer ersten
Endlage die Verkleidung nach außen abschließt und in
ihrer zweiten Endlage eine im wesentlichen um eine
waagrechte Achse in ihrem oberen Bereich geschwenkte
Lage einnimmt, in der der untere Rand (56) der Beschickungstür (10) ins Innere der Verkleidung verlagert ist, wobei die Beschickungstür (10) während ihrer
Bewegung derart geführt ist, daß ihre Unterkante (56)
zwiscen den beide Endlagen höher liegt als in den
Endlagen, wobei die Verkleidung zwei nach vorne zur
Beschickungstür (10) hin schräg zulaufende und nach
oben abgeschrägte symmetrische Wandteile (20) aufweist, dadurch gekennzeichnet, daß in an sich bekannter Weise ein motorischer Antrieb (95, 100, 101) zum
Öffnen und Schließen der Beschickungstür (10) vorgesehen ist, daß der motorische Antrieb (15, 100, 101)
in einer seitlichen Ausbuchtung (90) der Verkleidung
angeordnet ist, und daß der motorische Antrieb (95,
100, 101) mit einer Halterung (91, 98) sowie vorzugsweise der seitlichen Ausbuchtung (90) als Einsatzteil
in einer Fensteröffnung des Wandteils (20) ausgebildet
ist.

2. Werkzeugmaschine nach Anspruch 1, dadurch gekennzeichnet, daß der motorische Antrieb (95, 100, 101) einen Stellmotor (95) umfaßt, dessen Welle (100) über einen ersten Betätigungsarm (101) die Beschickungstür (10) verschwenkt.

3. Werkzeugmaschine nach Anspruch 2, dadurch gekennzeichnet, daß ein zweiter Betätigungsarm (103) auf der Welle (100) sitzt und in mindestens einer Endstellung des motorischen Antriebes (95, 100, 101) an einem raumfesten Anschlag (104, 105) anliegt.

4. Werkzeugmaschine nach einem der Ansprüche 1 bis 3, dadurch gekennzeichnet, daß ein Stellmotor (95) sowie ein Steuergerät (92) für den Stellmotor (95) auf einem die Ausbuchtung (90) überspannenden Halteblech (91) angeordnet sind.

5. Werkzeugmaschine nach einem der Ansprüche 1 bis 4, dadurch gekennzeichnet, daß die Beschickungstür (10) in ihrem unteren Bereich durch ein erstes Lenkerpaar (28) geführt ist, das einerseits an der Tür und andererseits an einem ortsfesten Teil der Verkleidung (1) angelenkt ist, und daß die Beschickungstür (10) außerdem durch ein zweites Lenkerpaar (36) geführt ist, das einerseits um eine ortsfeste Achse (22) schwenkbar ist und andererseits an der Beschickungstür (10) in deren oberem Bereich angelenkt ist, und daß der Schwenkweg des zweiten Lenkerpaars (36) zur Erzwingung eines Umkehrpunktes bei kontinuierlicher Verschwenkung des ersten Lenkerpaares begrenzt ist.

0235645

6. Werkzeugmaschine nach Anspruch 5, dadurch gekennzeichnet, daß das zweite Lenkerpaar (36) etwa bis zur
lotrechten Stellung schwenkbar ist.

7. Werkzeugmaschine nach Anspruch 5 oder 6, dadurch
gekennzeichnet, daß die Lenker (28, 36) der Lenkerpaare annähernd gleiche Länge haben.

8. Werkzeugmaschine nach einem der Ansprüche 1 bis 7,
dadurch gekennzeichnet, daß an der Beschickungstür
(10) eine Vorrichtung zur Gewichtsentlastung angreift.

9. Werkzeugmaschine nach Anspruch 8, dadurch gekennzeichnet, daß die Vorrichtung zur Gewichtsentlastung
eine Feder (44) aufweist.

10. Werkzeugmaschine nach Anspruch 9, dadurch gekennzeichnet, daß die Feder (44) einerseits an einem
ortsfesten Teil der Verkleidung (1) und andererseits
an einem mit dem zweiten Lenkerpaar (36) drehfest
verbundenen Hebelarm (40) angreift.

11. Werkzeugmaschine nach einem der Ansprüche 5 bis 10,
dadurch gekennzeichnet, daß die Lenker (36) des
zweiten Lenkerpaares durch eine in der Verkleidung (1)
gelagerte Welle (22) drehfest miteinander verbunden
sind.

12. Werkzeugmaschine nach einem der Ansprüche 1 bis 11,
dadurch gekennzeichnet, daß ein Endschalter (80) zur
Feststellung der Schwenklage der Beschickungstür (10)
vorgesehen ist.

0235645

10

3

12

1

Fig. 1

Fig. 2

Fig. 3

414      0235645

Fig. 4

Fig. 5